(19) Europäisches Patentamt
European Patent Office
Office européen des brevets

(11) EP 1 574 533 B1

(12) **EUROPEAN PATENT SPECIFICATION**

(45) Date of publication and mention of the grant of the patent:
**14.11.2007 Bulletin 2007/46**

(51) Int Cl.:
***C08F 265/06*** *(2006.01)* ***C09D 151/00*** *(2006.01)*
***C09D 133/04*** *(2006.01)*

(21) Application number: **05251198.7**

(22) Date of filing: **28.02.2005**

(54) **Aqueous dispersion of polymeric particles**

Wässrige Dispersion von Polymerteilchen

Dispersion aqueuse de particules de polymère

(84) Designated Contracting States:
**DE FR GB IT SE**

(30) Priority: **09.03.2004 US 551592 P**

(43) Date of publication of application:
**14.09.2005 Bulletin 2005/37**

(73) Proprietor: **ROHM AND HAAS COMPANY**
**Philadelphia,**
**Pennsylvania 19106-2399 (US)**

(72) Inventor: **Gebhard, Matthew Stewart**
**New Britain**
**Pennsylvania 18901 (US)**

(74) Representative: **Buckley, Guy Julian et al**
**Rohm and Haas (UK) Ltd.**
**European Patent Department**
**4th Floor, 22 Tudor Street**
**London EC4Y 0AY (GB)**

(56) References cited:
**EP-A- 0 522 789**
**EP-A- 1 008 635**
**EP-A- 1 160 335**
**EP-A- 1 302 515**
**EP-A- 1 304 343**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to an aqueous dispersion of polymeric particles, the particles including a first polymer and a second polymer. More particularly this invention relates to an aqueous dispersion of polymeric particles, the particles including from 5% to 20 % by weight, based on the weight of the polymeric particles, of a first polymer including at least one copolymerized ethylenically unsaturated nonionic monomer, the first polymer having a glass transition temperature ("Tg") of from 40 °C to 95 °C; and from 80% to 95% by weight, based on the weight of the polymeric particles, of a second polymer including at least one copolymerized ethylenically unsaturated nonionic monomer and from 0.25% to 5% by weight, based on the weight of the second polymer, of a copolymerized aldehyde-reactive monomer, the second polymer having a Tg of from -20 °C to 0 °C and an acid number of from 2 to 160. The invention further relates to an aqueous coating composition including the dispersion of polymer particles, a method for providing a coated substrate and the coated substrate so provided.

The present invention in one embodiment serves to provide an aqueous coating composition suitable for use, when dry, as a coating, "coating" herein including, for example, paint, clearcoat, topcoat, primer, paper coating, leather coating, textile and nonwoven fabric coating and saturant, elastomeric coating, caulk, sealant, and pressure sensitive adhesive. Such a coating of the present invention typically exhibits improvement in at least one of low temperature film formation, adhesion to substrates such as adhesion to substrates previously coated with gloss alkyds, and exterior durability as indicated, for example, by gloss retention or dirt pickup resistance, relative to a coating in which an aqueous dispersion of polymeric particles of different composition is employed or, alternatively, relative to a coating in which an aqueous dispersion of a single polymer is employed.

EP-A-1 304 343 discloses a polymer composition comprising polymer particles dispersed in an aqueous medium, wherein the polymer particles contain, based on the weight of the polymer particles: from 10 to 70 weight % first polymer; and from 30 to 90 weight % second polymer; wherein the first polymer has a glass transition temperature in the range of - 30 °C to 100 °C and contains as polymerized units, based on the weight of the first polymer, from: 85 to 99.9 weight % comonomer, 0 to 5 weight % anionic monomer, and 0.1 to 10 weight % multiethylenically unsaturated monomer, and wherein the second polymer has a glass transition temperature in the range of-10 °C to less than °C and contains as polymerized units, based on the weight of the second polymer, from: 70 to 99 weight % comonomer, 0 to 10 weight % anionic monomer, and 1 to 20 weight % crosslinking monomer.

U.S. Patent No. 6,476,097 discloses an essentially solventless pigmented aqueous formulation which comprises at least one polymer A in the form of polymer particles including from 80 to 99.9% by weight, based on the overall weight of the polymer A, of a water-insoluble polymer 1 having a glass transition temperature Tg1 in the range from -50 to +40 C, built up from ethylenically unsaturated monomers M1 and from 0.1 to 20% by weight, based on the overall weight of the polymer A, of one or more water-insoluble polymers i having a glass transition temperature Tgi of more than 50 C, built up from ethylenically unsaturated monomers Mi ; at least one pigment and, if desired, one or more extenders.

The problem faced by the inventors is the provision of an aqueous composition suitable for use when dry as an improved coating. Unexpectedly, the inventors found that selected aqueous dispersions of polymer particles in which selected quantities of a first and a second polymer each having certain selected compositions confer important advantages in one or more dry coatings properties.

In a first aspect of the present invention there is provided an aqueous dispersion of polymeric particles, said particles comprising from 5% to 20 % by weight, based on the weight of said polymeric particles, of a first polymer comprising at least one copolymerized ethylenically unsaturated nonionic monomer, said first polymer having a glass transition temperature (Tg) of from 40 °C to 95 °C; and from 80% to 95% by weight, based on the weight of said polymeric particles, of a second polymer comprising at least one copolymerized ethylenically unsaturated nonionic monomer and from 0.25% to 5% by weight, based on the weight of said second polymer, of a copolymerized aldehyde-reactive monomer, said second polymer having a Tg of from -20 °C to 0 °C and an acid number of from 2 to 160.

In a second aspect of the present invention there is provided an aqueous coating composition comprising the aqueous dispersion of the first aspect of the present invention and at least one pigment, said coating composition having a pigment volume concentration of from 5 to 60 and having a VOC of less than 5%.

In a third aspect of the present invention there is provided a method for providing a coated substrate comprising: forming said aqueous coating composition of the second aspect of the present invention; applying said aqueous coating composition to said substrate; and drying, or allowing to dry, said aqueous composition.

In a fourth aspect of the present invention there is provided a coated substrate formed by the method of the third aspect of the present invention.

This invention relates to an aqueous dispersion of polymeric particles, the particles including at least one first polymer and one second polymer. Each of the first polymer and the second polymer includes at least one copolymerized ethylenically unsaturated nonionic monomer. By "nonionic monomer" herein is meant that the copolymerized monomer residue does not bear an ionic charge between pH=1-14.

Ethylenically unsaturated nonionic monomers include, for example, (meth)acrylic ester monomers including

methyl acrylate, ethyl acrylate, butyl acrylate, 2-ethylhexyl acrylate, decyl acrylate, lauryl acrylate, methyl methacrylate, butyl methacrylate, ethyl methacrylate, isodecyl methacrylate, lauryl methacrylate, hydroxyethyl methacrylate, hydroxypropyl methacrylate, (meth)acrylonitrile, and (meth)acrylamide; hydrocarbon monomers such as ethylene and propylene; styrene and substituted styrenes; butadiene; vinyl acetate, vinyl butyrate and other vinyl esters; vinyl monomers such as vinyl chloride, vinyl toluene, and vinyl benzophenone; and vinylidene chloride. Preferred first polymers and second polymers, independently, are all-(meth)acrylic, predominantly (meth)acrylic, styrene/(meth)acrylic, and vinyl acetate/acrylic multistage polymers, i.e., the overall composition includes those monomers or classes of monomers. Preferred is a predominantly (meth)acrylic aqueous polymer. By "predominantly (meth)acrylic" herein is meant that the polymer particles contain greater than 50%, by weight, copolymerized units deriving from nonionic (meth)acrylic monomers such as, for example, (meth)acrylate esters, (meth)acrylamides, and (meth)acrylonitrile. The use of the term "(meth)" followed by another term such as acrylate or acrylamide, as used throughout the disclosure, refers to both acrylates or acrylamides and methacrylates and methacrylamides, respectively.

The first polymer can contain from 0% to 7.5%, preferably from 0% to 2.5%, by weight based on stage monomer weight, of a copolymerized monoethylenically-unsaturated acid monomer, based on the weight of the polymer, such as, for example, acrylic acid, methacrylic acid, crotonic acid, itaconic acid, fumaric acid, maleic acid, monomethyl itaconate, monomethyl fumarate, monobutyl fumarate, maleic anhydride, 2-acrylamido-2-methylpropane sulfonic acid, vinyl sulfonic acid, styrene sulfonic acid, 1-allyloxy-2-hydroxypropane sulfonic acid, alkyl allyl sulfosuccinic acid, sulfoethyl (meth) acrylate, phosphoalkyl (meth)acrylates such as phosphoethyl (meth)acrylate, phosphopropyl (meth)acrylate, and phosphobutyl (meth)acrylate, phosphoalkyl crotonates, phosphoalkyl maleates, phosphoalkyl fumarates, phosphodialkyl (meth)acrylates, phosphodialkyl crotonates, and allyl phosphate. In some embodiments an acid monomer and amide monomer are both used such as, for example, from 0.1 to 2.5 weight % itaconic acid and from 0.1 to 2.5 weight% acrylamide, each based on the weight of the polymer. Preferably, the first polymer has an acid number of from 0.1 to 13. The second polymer has an acid number of from 2 to 160, preferably from 2 to 30. The acid number, the mg of KOH required to neutralize 1 g of polymer, can be calculated or measured as is known in the art..

The second polymer contains from 0.25% to 5.0%, by weight based on the weight of the dry second stage, of a copolymerized ethylenically-unsaturated aldehyde reactive group-containing monomer, based on the weight of the polymer. By "aldehyde reactive group-containing monomer" is meant herein a monomer which, in a homogeneous solution containing 20% by weight of the monomer and an equimolar amount of formaldehyde at any pH from 1 to 14, will exhibit greater than 10% extent of reaction between the monomer and formaldehyde on a molar basis in one day at 25 °C. Ethylenically-unsaturated aldehyde reactive group-containing monomers are, for example, vinyl acetoacetate, acetoacetoxyethyl (meth)acrylate, acetoacetoxypropyl (meth)acrylate, allyl acetoacetate, acetoacetoxybutyl (meth)acrylate, 2,3-di(acetoacetoxy)propyl (meth)acrylate, vinyl acetoacetamide, acetoacetoxyethyl (meth)acrylamide, 3-(2-vinyloxyethylamino)-propionamide, N-(2-(meth)acryloxyethyl)-morpholinone-2, 2-methyl-1-vinyl-2-imidazoline, 2-phenyl-1-vinyl-2-imidazoline, 2-(3-Oxazolidinyl)ethyl (meth)acrylate, N-(2-vinoxyethyl)-2-methyloxazolidine, 4,4-dimethyl-2-isopropenyloxazoline, 3-(4-pyridyl)propyl (meth)acrylate, 2-methyl-5-vinyl-pyridine, 2-vinoxyethylamine, 2-vinyloxyethylethylene-diamine, 3-aminopropyl vinyl ether, 2-amino-2-methylpropyl vinyl ether, 2-aminobutyl vinyl ether, tert-butylaminoethyl (meth)acrylate, 2-(meth)acryloxyethyldimethyl-β-propiobetaine, diethanolamine monovinyl ether, o-aniline vinyl thioether, (meth)acryloxyacetamido-ethylethyleneurea, ethyleneureidoethyl (meth)acrylate, (meth)acrylamidoethyl-ethyleneurea, (meth)acrylamidoethyl-ethylenethiourea, N-((meth)acrylamidoethyl)-$N^1$-hydroxymethylethyleneurea, N-((meth)acrylamidoethyl)-$N^1$-methoxymethylethyleneurea, N-formamidoethyl-$N^1$-vinylethyleneurea, N-vinyl-$N^1$-aminoethyl-ethyleneurea, N-(ethyleneureidoethyl)-4-pentenamide, N-(ethylenethioureido-ethyl)-10-undecenamide, butyl ethyleneureido-ethyl fumarate, methyl ethyleneureido-ethyl fumarate, benzyl N-(ethyleneureido-ethyl) fumarate, benzyl N-(ethyleneureido-ethyl) maleamate, N-vinoxyethylethylene-urea, N-(ethyleneureidoethyl)-crotonamide, ureidopentyl vinyl ether, 2-ureidoethyl (meth)acrylate, N-2-(allylcarbamoto)aminoethyl imidazolidinone, 1-(2-((20hydroxy-3-(2-propenyloxy)propyl)amino)ethyl)-2-imidazolidinone, hydrogen ethyleneureidoethyl itaconamide, ethyleneureidoethyl hydrogen itaconate, bis-ethyleneureidoethyl itaconate, ethyleneureidoethyl undecylenate, ethyleneureidoethyl undecylenamide, 2-(3-methylolimidazolidone-2-yl-1)ethyl acrylate, N-acryloxyalkyl oxazolidines, acylamidoalkyl vinyl alkyleneureas, aldehyde-reactive amino group-containing monomers as dimethyaminoethyl methacrylate, and ethylenically unsaturated monomers containing aziridene functionality. The first polymer can include from 0% to 2.5%, by weight based on dry first polymer weight, of a copolymerized ethylenically-unsaturated aldehyde reactive group-containing monomer.

In an alternative embodiment polymers containing a sufficient amount of copolymerized monomer(s) having reactive functionality, which is not reactive with aldehydes, to provide, after reaction, during or after the emulsion polymerization, copolymerized aldehyde-reactive monomer equivalent are also included. By "copolymerized monomer equivalent" is meant herein the copolymerized monomer which would have led to the copolymer even though the polymer was formed by a post-polymerization reaction rather than directly formed by the copolymerization of that monomer. In this embodiment, for example, the reaction product of polymers containing carboxylic acid functionality with compounds consisting of or containing an aziridine (ethyleneimine) ring or rings can be formed. Substitution on the ring can be on the nitrogen and /or either or both carbons such as, for example, ethyleneimine, propyleneimine, N-(2-hydroxyethyl)

ethyleneimine, trimethylolpropane-tris-(β-(N-aziridinyl) propionate), and pentaerythritol trimethylolpropane-tris-(β-(N-aziridinyl) propionate). Also, polymers containing β-aminoester and/ or β-hydroxyamide functionality can be formed by post-polymerization processes.

In one embodiment of this invention at least one of the first polymer and the second polymer, independently, preferably the second polymer, includes, as polymerized units, from 0.25 to 20%, preferably from 0.5 to 10%, and more preferably from 1% to 5%, by weight of a an alkyl-substituted vinyl aromatic monomer, preferably a monomer of formula (i) based on the total weight of polymerized monomer units in the multistage emulsion polymer

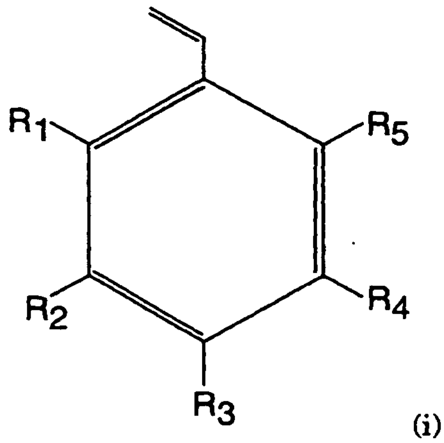

(i)

wherein $R_1$, $R_2$, $R_3$, $R_4$ and $R_5$ are selected from the group consisting of H and $C_1$-$C_4$alkyl, with the proviso that at least one of $R_1$, $R_{\ 2}$, $R_3$, $R_4$ and $R_5$ is $C_1$-$C_4$ alkyl.

Preferred compounds of formula (i) are those wherein at least one of R 1, $R_2$, $R_3$, $R_4$ and $R_5$ is $C_1$-$C_2$alkyl. Suitable compounds of formula (i) include methylstyrene, ethylstyrene, dimethylstyrene, diethylstyrene and trimethylstyrene. The more preferred compounds of formula (i) are those wherein only one of $R_1$, $R_2$, $R_3$, $R_4$, and $R_5$ are methyl, and the remainder are hydrogen; such a compound is referred to herein as "methylstyrene." Methylstyrene suitable for use in the present invention can be a single isomer, or a mixture of more than one isomer. Methylstyrene is often made available as "vinyltoluene" as a mixture of isomers.

In some embodiments either of the first polymer and the second polymer, independently, preferably the first polymer, can contain from 0.1% to 5%, by weight based on dry polymer weight, copolymerized multi-ethylenically unsaturated monomers such as, for example, allyl methacrylate, diallyl phthalate, 1,4-butylene glycol dimethacrylate, 1,2-ethylene glycol dimethacrylate, 1,6-hexanediol diacrylate, and divinyl benzene.

The glass transition temperature ("Tg") of the polymer in each of the first and second polymer herein is that calculated by using the Fox equation (T.G. Fox, Bull. Am. Physics Soc., Volume 1, Issue No. 3, page 123(1956)). that is, for calculating the Tg of a copolymer of monomers M1 and M2,

$$1/Tg(calc.) = w(M1)/Tg(M1) + w(M2)/Tg(M2)$$

,

wherein
Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2,
all temperatures being in °K.

The glass transition temperatures of homopolymers can be found, for example, in "Polymer Handbook", edited by J. Brandrup and E.H. Immergut, Interscience Publishers. The first polymer has a Tg of from 40 °C to 95 °C, preferably from 60 °C to 75 °C. The second polymer has a Tg of from -20 °C to 0 °C, preferably from -13 °C to -6 °C.

In one embodiment the polymeric particles include from 5% to20%, preferably from 5% to 15%, and more preferably from 10% to 15%, by weight based on the weight of the polymer particles, of the first polymer; and from 80%

to 95%, and preferably from 85% to 90%, by weight based on the weight of the polymer particles, of the second polymer. The first polymer and the second polymer are preferably formed in a multistage polymerization in which the stages are formed in sequence. The stages of such multistage emulsion polymers can be formed in any desired order, "first polymer" and "second polymer" indicating compositionally different stages and not necessarily the order of the preparation of the stages. Preferably, the second polymer is formed in the presence of the first polymer. In certain embodiments of the multistage polymerization an overlapped feed process can be used wherein the addition of the second polymer monomer is begun before the end of the first polymer monomer addition or vice versa.

The aqueous dispersion of polymer particles of the present invention is typically formed by an emulsion polymerization process. The polymerization techniques used to prepare aqueous emulsion polymers are well known in the art. In the polymerization of the aqueous dispersion of polymeric particles of this invention each polymer is prepared independently in the sense that surfactants, initiators, etc. are selected independently and can be the same or different in kind and amount for each stage, recognizing, however, that subsequent stage(s) are prepared in the presence of previously prepared stage(s) and, in the absence of inter-stage treatment which is contemplated but not preferred, remaining ingredients from earlier stages can persist during the preparation of later stages. In the emulsion polymerization process conventional surfactants can be used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. The amount of surfactant used is usually 0.1% to 6% by weight, based on the weight of monomer. Either thermal or redox initiation processes can be used. The reaction temperature is maintained at a temperature lower than 120 °C throughout the course of the reaction. Preferred is a reaction temperature between 30 °C and 95 °C, more preferably between 50 °C and 90 °C. The monomer mixture can be added neat or as an emulsion in water. The monomer mixture can be added in one or more additions or continuously, linearly or not, over the reaction period, or combinations thereof. When relatively weak acid monomers, such as acrylic or methacrylic acid, are incorporated into the composition it can be desirable to add neutralizing agents or buffers during some or all of the polymerization process to maintain a pH of approximately 4 to 8.

In at least one stage, preferably at least in the second polymer formation stage, polymerization is effected in the presence of 0.01-1.0%, by weight based on the dry weight of the stage polymer, t-alkyl hydroperoxide, t-alkyl peroxide, or t-alkyl perester wherein the t-alkyl group includes at least 5 Carbon atoms, preferably in the presence of 0.01-1.0 %, by weight based on the dry weight of the stage polymer, of t-alkyl hydroperoxide wherein the t-alkyl group includes at least 5 Carbon atoms; and more preferably in the presence of 0.01-1.0 %, by weight based on the dry weight of the stage polymer, of t-amyl hydroperoxide. Conventional free radical initiators (oxidants) which can be used in addition in the at least one stage just described, or exclusively in other stages, include, for example, hydrogen peroxide, sodium peroxide, potassium peroxide, t-butyl hydroperoxide, cumene hydroperoxide, ammonium and/or alkali metal persulfates, sodium perborate, perphosphoric acid and salts thereof, potassium permanganate, and ammonium or alkali metal salts of peroxydisulfuric acid, typically at a level of 0.01% to 3.0% by weight, based on the weight of stage monomer. Redox systems using one or more oxidants with a suitable reductant such as, for example, sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, hydroxymethanesulfonic acid, sodium 2-hydroxy-2-sulfinatoacetic acid, acetone bisulfite, amines such as ethanolamine, glycolic acid, glyoxylic acid hydrate, lactic acid, glyceric acid, malic acid, tartaric acid and salts of the preceding acids can be used in any stage. Redox reaction catalyzing metal salts of iron, copper, manganese, silver, platinum, vanadium, nickel, chromium, palladium, or cobalt can be used. Typical levels of catalytic metal salts used in accordance with the invention range from 0.01 ppm to 25 ppm. Mixtures of two or more catalytic metal salts can also be usefully employed. Chelating ligands which can be used when catalytic metal salts are used include multidentate aminocarboxylate ligands such as, for example, nitrilotriacetic acid (NTA, a tetradentate ligand), ethylene diamine diacetic acid (EDDA, a tetradentate ligand), N-(hydroxyethyl)ethylene diamine triacetic acid (HEDTA, a pentadentate ligand), ammonia diacetic acid (ADA, a tridentate ligand) and ethylene diamine tetraacetic acid (EDTA, a hexadentate ligand). Other suitable chelating ligands can include chelating ligands such as, for example, bidentate aminocarboxylate ligands, porphyrin ligands having one or two ancillary carboxylate ligands, nitrogen containing macrocycles having ancillary carboxylate ligands and mixtures of multidentate diamines, triamines and dicarboxylic acids. Combinations of two or more multidentate aminocarboxylate ligands can also be usefully employed.

By "in the presence of 0.01-1.0 %, by weight based on the dry weight of said polymer, t-alkyl hydroperoxide, t-alkyl peroxide, or t-alkyl perester wherein the t-alkyl group includes at least 5 Carbon atoms" is meant that the cumulative amount of t-alkyl hydroperoxide, t-alkyl peroxide, or t-alkyl perester wherein the t-alkyl group includes at least 5 Carbon atoms which has been added to the reaction zone wherein at least some of the monomers are being converted to the emulsion polymer is 0.01-1.0 %, by weight based on the dry weight of the stage polymer; optionally wherein at least 95%, preferably the last 95%, by weight of the monomers are being converted to the emulsion polymer; optionally wherein at least 75%, preferably the last 75%, by weight of the monomers are being converted to the emulsion polymer; optionally

wherein at least the last 50% by weight of the monomers are being converted to the emulsion polymer; and further optionally wherein at least the last 20% by weight of the monomers are being converted to the emulsion polymer. The optional additional oxidant includes those listed hereinabove as conventional free radical initiators such as, for example, tert-butylhydroperoxide, hydrogen peroxide, ammonium persulfate, and the like. In certain embodiments of the present invention, it is advantageous to choose a mixture containing one hydrophilic initiator and the relatively hydrophobic t-alkyl hydroperoxide, t-alkyl peroxide, or t-alkyl perester wherein the t-alkyl group includes at least 5 Carbon atoms in order to increase the overall efficiency of the initiator system with regard to the initiation of the full range of hydrophilic and hydrophobic monomers; preferably the optional additional oxidant(s) are less than 50% by weight of the total amount of initiator/oxidant. In this embodiment the t-alkyl hydroperoxide, t-alkyl peroxide, or t-alkyl perester wherein the t-alkyl group includes at least 5 Carbon atoms initator(s) and optional at least one other oxidant can be used as such or as the oxidant component(s) of a redox system using the same initiator(s) coupled with at least one suitable reductant such as those listed hereinabove.

In one embodiment, after 90-99.7 %, preferably 95-99.7%, of the monomers, preferably the monomers used in forming the second polymer, by weight, based on the total weight of the polymer, have been converted to polymer, at least half of the remaining monomer is converted to polymer in the presence of 0.01-1.0 %, by weight based on the dry weight of the stage polymer, of t-alkyl hydroperoxide, t-alkyl peroxide, or t-alkyl perester wherein the t-alkyl group includes at least 5 Carbon atoms; preferably in the presence of 0.01-1.0 %, by weight based on the dry weight of the stage polymer, of t-alkyl hydroperoxide wherein the t-alkyl group includes at least 5 Carbon atoms; and more preferably in the presence of 0.01-1.0 %, by weight based on the dry weight of the stage polymer, of t-amyl hydroperoxide. This part of the reaction can be effected as soon as 90-99.7%, preferably 95-99.7%, conversion of the monomers to polymer is completed in the same reaction vessel or kettle. It can be effected after a period of time, in a different reaction vessel or kettle such as a holding tank or a drain tank, or at a different temperature than the preceding part of the polymerization. Preferred is the presence of t-alkyl hydroperoxide, t-alkyl peroxide, or t-alkyl perester wherein the t-alkyl group includes at least 5 Carbon atoms only after 90%, more preferably only after 95%, conversion of the monomers to polymer is completed.

The t-alkyl hydroperoxide, t-alkyl peroxide, or t-alkyl perester wherein the t-alkyl group includes at least 5 Carbon atoms, optional additional oxidant(s), and optional reductant(s) can be added, for example, together or separately, in one or more shots or gradually, whether uniformly or not, or in combinations thereof or variations thereon as is desired; they can be added neat, in solution, or emulsified in an appropriate medium.

Chain transfer agents such as, for example, halogen compounds such as tetrabromomethane; allyl compounds; or mercaptans such as alkyl thioglycolates, alkyl mercaptoalkanoates, and $C_4$-$C_{22}$ linear or branched alkyl mercaptans can be used to lower the molecular weight of the formed polymer and/or to provide a different molecular weight distribution than would otherwise have been obtained with any free-radical-generating initiator(s). Linear or branched $C_4$-$C_{22}$ alkyl mercaptans such as n-dodecyl mercaptan and t-dodecyl mercaptan are preferred. Chain transfer agent(s) can be added in one or more additions or continuously, linearly or not, over most or all of the entire reaction period or during limited portion(s) of the reaction period such as, for example, in the kettle charge and in the reduction of residual monomer stage.

In one embodiment at least one of the stages in the multistage emulsion polymer is prepared by a polymerization process having controlled conversion of the monomer to polymer. In the "controlled conversion process" as described in EP 1,352,924, the monomer is added to an aqueous reaction medium and polymerized in the presence of at least 5 weight % added monomer that has remained unreacted, based on the accumulated weight of added monomer. In this embodiment, at least 40 weight %, preferably at least 60 weight%, and more preferably at least 90 weight% of at least one of the polymer stages is prepared in the presence of excess unreacted monomer.

A multistage emulsion polymerization process, in which at least two stages differing in composition are polymerized in sequential fashion as is preferred herein, usually results in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. The multistage emulsion polymer can also be formed in two or more stages, the stages differing in molecular weight as well as, or in addition to, in composition.

The polymeric particles of the aqueous dispersion have an average particle diameter of from 20 to 1000 nanometers, preferably of from 70 to 300 nanometers. Particle sizes herein are those determined using a Brookhaven Model BI-90 particle sizer manufactured by Brookhaven Instruments Corporation, Holtsville NY, reported as "effective diameter". Also contemplated are multimodal particle size emulsion polymers wherein one or more of the particle size modes are polymeric particles of the present invention and wherein two or more distinct particle sizes or very broad distributions are provided as is taught in US Patents No. 5,340,858; 5,350,787; 5,352,720; 4,539,361; and 4,456,726.

The aqueous dispersion of polymeric particles typically has a solids content of greater than 40%, preferably greater than 50%, by weight.

In one embodiment the multistage emulsion polymer can be contacted with a crosslinking agent. The crosslinking

agents are those coreactive with functional groups on the multistage emulsion polymer, such as amine groups, keto groups, aldehyde groups, acetoacetoxy groups, cyanoacetoxy groups, hydroxy groups, epoxy groups, and acid groups. The type and level of crosslinking agent are chosen such that the ability of the multistage emulsion polymer composition to form a film is not materially affected. The crosslinking agent can be incorporated into the multistage emulsion polymer before, during, or after the polymerization. Suitable crosslinking agents include, for example; multifunctional amine compounds, oligomers and polymers that have at least two amine groups such as hexamethylene diamine, ethylenediamine, 1,2-diaminopropane, 2-methyl-1,5-pentane diamine, 1,4-diaminobutane, 1,12-diaminododecane, 1,2-diaminocylcohexane, 1,2-phenyldiamine, diaminotoluene, polyethylene imine, difunctional and trifunctional Jeffamine™ curing agents (Huntsman Petrochemical Corporation), and aqueous polyurethane dispersions with pendant amino, hydrazide or hydrazine groups; aminosilanes such as 3-aminopropyltrimethoxysilane, 3-aminopropyltriethoxysilane, 3-aminopropylmethyldimethoxysilane, 3-aminopropylmethyldiethoxysilane, 3-aminopropyltriisopropoxysilane, 3-aminopropylmethyldiisopropoxysilane, 3-aminopropylmethyldiisopropoxysilane, 3-aminopropyltriisopropoxysilane, N-2-aminoethyl-3-aminopropyltrimethoxysilane, and N-2-aminoethyl-3-aminopropylmethyldiisopropoxysilane; epoxy silanes such as glycidoxypropyltrimethoxysilane, glycidoxypropylmethyldimethoxysilane, glycidoxypropyltriethoxysilane, glycidoxypropylmethyldiethoxysilane, or beta-(3,4-epoxycyclohexyl)ethyltriethoxysilane; multifunctional isocyanates such as Bayhydur™ XP-7063 isocyanate (Bayer); aliphatic carbodiimides such as Ucarlink™ XL-29SE crosslinker (Dow Chemical Co.), or those disclosed in U.S. Patent 4,977,219; aromatic carbodiimides such as disclosed in U.S. 5,574,083; divalent metal ions such as $Zn^{2+}$, $Mg^{2+}$, $Ca^{2+}$; and zirconates such as ammonium zirconium carbonate. Preferably, the multifunctional amine compounds employed as crosslinking agents in the polymer composition are primary amine groups. Preferred levels for the multifunctional amine compounds with primary amine groups in the polymer composition is a ratio of 0.1 to 1 primary amine groups per coreactive group. Preferred aminosilanes include N-2-aminoethyl-3-aminopropylmethyldimethoxysilane, N-2-aminoethyl-3-aminopropyl trimethoxysilane, and 3-aminopropylmethyldimethoxysilane.

The aqueous coating composition of the present invention is prepared by techniques which are well known in the coatings art. First, if the coating composition is to be pigmented, at least one pigment is typically well dispersed in an aqueous medium under high shear such as is afforded by a COWLES® mixer. Then the aqueous dispersion of polymeric particles is added under lower shear stirring along with other coating adjuvants as desired. Alternatively, the aqueous dispersion of polymeric particles can be included in the pigment dispersion step. The aqueous coating composition can contain conventional coating adjuvants such as, for example, tackifiers, pigments, emulsifiers, crosslinkers, coalescing agents, buffers, neutralizers, thickeners or rheology modifiers, humectants, wetting agents, biocides, plasticizers, antifoaming agents, colorants, waxes, and anti-oxidants. The aqueous coating composition can contain up to 50%, by weight based on the weight of the polymeric particles, of an emulsion polymer not meeting the description of the aqueous dispersion of polymeric particles of the present invention, such as a film-forming and/or a non-film-forming emulsion polymer.

In one embodiment, the aqueous coating composition includes a photosensitive moiety. The photosensitive moiety is capable of absorbing some portion of the solar light spectrum and potentially acting as a photoinitiator for crosslinking of the polymer during exterior exposure. The photosensitive moiety can be a photosensitive compound added to the aqueous polymer composition before, during, or after polymerization is effected, or a photosensitive group that is chemically incorporated into one or more of the polymer stages of the multistage emulsion polymer composition, for example, by copolymerization. Examples of photosensitive compounds are benzophenone derivatives wherein one or both of the phenyl rings can be substituted such as, for example, benzophenone, 4-methyl benzophenone, 4-hydroxy benzophenone, 4-amino benzophenone, 4-chloro benzophenone, 4-hydroxycarboxyl benzophenone, 4,4'-dimethyl benzophenone, 4,4'-dichloro benzophenone, 4-carboxymethyl benzophenone, 3-nitro benzophenone, substituted phenyl ketones such as substituted phenyl acetophenones. The photosensitive groups can be present in one or more of the stages as copolymerized ethylenically unsaturated monomers that contain photosensitive groups. Examples of ethylenically unsaturated monomers that contain photosensitive groups include vinyl toluene, allyl benzoylbenzoates and monomers incorporating pendant benzophenone groups, such as vinylbenzyl methylbenzoylbenzoate, hydroxymethacryloxypropyl methylbenzoylbenzoate, hydroxymethacryloxypropyl benzoylbenzoate, and hydroxymethacryloxypropoxy benzophenone. Preferred as a photosensitive compound is benzophenone. The aqueous coating composition can contain from 0.1 to 5 weight %, preferably from 0.1 to 3 weight %, and more preferably, 0.1 to 1 weight % of one or more photosensitive compounds, based on dry polymer weight.

Preferably the aqueous coating composition contains less than 5% VOC by weight based on the total weight of the coating composition; more preferably the aqueous coating composition contains less than 3% VOC by weight based on the total weight of the coating composition; even more preferably the aqueous coating composition contains less than 1.7% VOC by weight based on the total weight of the coating composition. A volatile organic compound ("VOC") is defined herein as a carbon containing compound that has a boiling point below 280°C at atmospheric pressure, compounds such as water and ammonia being excluded from VOCs.

A "low VOC" coating composition herein is a coating composition which contains less than 5% VOC by weight based on the total weight of the coating composition; preferably it contains between 1.7% and 0.01% by weight based

on the total weight of the coating composition.

Frequently a VOC is deliberately added to a paint or coating to improve the film properties or to aid in coatings application properties. Examples are glycol ethers, organic esters, aromatic compounds, ethylene and propylene glycol, and aliphatic hydrocarbons. It is preferred that the coating composition contains less than 5% by weight based on the total weight of the coating composition of the added VOCs and more preferably less than 1.7% by weight based on the total weight of the coating composition of the added VOCs.

Additionally, the low VOC coating composition can contain coalescing agents which are not VOCs. A coalescing agent is a compound that is added to a water-borne emulsion polymer, paint or coating and which reduces the minimum film forming temperature (MFFT) of the emulsion polymer, paint or coating by at least 1°C. The MFFT is measured using ASTM test method D2354. Examples of coalescing agents that are not VOCs include plasticizers, low molecular weight polymers, surfactants, and autooxidizable plasticizers such as alkyl esters of unsaturated fatty acids. A non-VOC coalescing agent is a coalescing agent which has a boiling point above 280°C at atmospheric pressure. Preferred are alkyl esters prepared from oils such as linseed, tung, dehydrated castor, soybean, tall, sunflower, and corn. Examples of non-VOC coalescing agents include esters of unsaturated fatty acids, such as mono, di-, or triunsaturated fatty acids. Suitable unsaturated fatty acid esters include monounsaturated fatty acid esters formed from palmitoleic acid, oleic acid, or caproleic acid; diunsaturated fatty acid esters formed from linoleic acid; triunsaturated fatty acid esters formed from linolenic acid or eleosteric acid, or mixtures thereof. Suitable esters of unsaturated fatty acids includes alkyl esters such as, such as methyl and ethyl esters; substituted alkyl esters, such as esters formed from ethylene glycol and propylene glycol; and alkyl ether esters of unsaturated fatty acids, diethylene glycol, triethylene glycol, dipropylene glycol, tripropylene glycol, and diethylene glycol monobutyl ether. In one embodiment, the above autooxidizable plasticizers are used in conjunction with multistage emulsion polymers which contain 0.25% to 12.5% of acetoacetoxyethyl (meth)acrylate as polymerized units based on the total weight of copolymerized monomer units in the multistage emulsion polymer. Autooxidation can further be enhanced by the use of metal ion catalysts such as cobalt, zirconium, calcium, manganese, copper, zinc and iron. Simple salts such as halides, nitrates, and sulfates can be used but in many cases an organic anion such as the acetate, naphthenate or acetoacetate is used.

Typical methods of paint or coating preparation can introduce adventitious VOCs from the emulsion polymer, biocides, defoamers, soaps, dispersants, and thickeners. These typically account for 0.1% VOC by weight based on the total weight of the coating composition. Additional methods such as steam stripping and choice of low VOC containing additives like biocides, defoamers, soaps, dispersants, and thickeners, can be used to further reduce the paint or coating to less than 0.01% VOC by weight based on the total weight of the coating composition.

In a preferred embodiment the aqueous coating composition has a pigment volume concentration ("PVC") of from 5 to 85, preferably from 5 to 60, and more preferably from15 to 38 and has less than 5% VOC by weight based on the total weight of the coating composition. In another preferred embodiment the aqueous coating composition has a PVC of from 38 to 60 and has less than 3% VOC by weight based on the total weight of the coating composition. In an additional embodiment the aqueous coating composition has a PVC of from 5 to 85 and has less than 1.6% VOC by weight based on the total weight of the coating composition. The PVC is calculated by the following formula:

$$\text{PVC (\%)} = \frac{\text{volume of pigment(s), + volume extender(s)}}{\text{total dry volume of paint}} \times 100.$$

The solids content of the aqueous coating composition can be from 10% to 85 % by volume. The viscosity of the aqueous composition can be from 0.05 to 2000 Pa.s (50 cps to 2,000,000 cps), as measured using a Brookfield viscometer; the viscosities appropriate for different end uses and application methods vary considerably.

The aqueous coating composition can applied by conventional application methods such as, for example, brush or paint roller, air-atomized spray, air-assisted spray, airless spray, high volume low pressure spray, air-assisted airless spray, and electrostatic spray.

The aqueous coating composition can be applied to a substrate such as, for example, plastic including sheets and films, glass, wood, metal such as aluminum, steel, and phosphate or chromate-treated steel, previously painted surfaces, weathered surfaces, cementitious substrates, and asphaltic substrates, with or without a prior substrate treatment such as a primer.

The aqueous composition coated on the substrate is typically dried, or allowed to dry, at a temperature from 20°C to 95°C.

The following examples are presented to illustrate the invention. In the examples the following abbreviations have been used

LTFF is Low Temperature Film Formation

RH is Relative Humidity

DPUR is Dirt Pick Up Resistance
BA is Butyl Acrylate
MMA is Methyl Methacrylate
MAA is Methacrylic Acid
VT is Vinyl Toluene
UM is Ureido Methacrylate
n-DDM is n-Dodecyl Mercaptan
DI is Deionized
APS is Ammonium Persulphate
ALMA is Allyl Methacrylate
wt is weight; vol is volume

Test methods for evaluating coating performance

Low Temperature Film Formation (LTFF):

LTFF is evaluated by preparing an aqueous coating composition. The coating contains 22% by vol $TiO_2$ and 8% by vol Ropaque™ Ultra based on the total vol of the nonvolatile components in the coatings, and contains 36% by vol nonvolatile materials based on the total vol of materials present in the aqueous coating. For determining the % by vol of all nonvolatile materials, any material with a boiling point below 280°C is considered volatile. In preparing the following coating composition appropriate adjustments in the added water are made to account for the % wt solids of the aqueous dispersion of polymeric particles so as to keep the % by vol of nonvolatile materials at 36%. A pigment grind using the ingredients in Table A is made using a Cowles pigment disperser.

Table A

| Ingredient | Grams of material |
|---|---|
| Water | 12.52 |
| Tamol™ 731A (Rohm and Haas Co. Philadelphia PA) | 1.98 |
| Tego Foamex™ 810 (Goldschmidt Chemical Corporation, Hopewell VA) | 0.25 |
| Surfynol™ CT-111 (Air Products, Allentown PA) | 0.50 |
| Ti-Pure™ R-706 (E.I. Dupont de Nemours and Co. Wilmington DE) | 66.11 |

The following ingredients (Table B) are then added in the following order

Table B

| **Ingredient** | **Grams of material** |
|---|---|
| Ropaque™ Ultra (Rohm and Haas Co. Philadelphia PA.) | 11.84 |
| Water | 10.52 |
| Aqueous dispersion of polymeric particles (@ 50% solids by wt) | 119.07 |
| Texanol™ @ 6% on polymeric particles by wt (Eastman Chemical Co.) | 3.79 |
| Surfynol™ CT-111 (Air Products, Allentown PA) | 0.25 |
| Acrysol™ RM-2020 NPR (Rohm and Haas Co. Philadelphia PA.) | 3.00 |
| Acrysol™ RM-8W (Rohm and Haas Co. Philadelphia PA) | 0.40 |
| Water | 35.23 |

The aqueous coating compositions are painted by brush onto a white pine board in a controlled environmental room set at 40F/70%RH. The boards, paints, and required testing materials are placed in the environmental room at least 1 hour prior to testing, to allow materials to equilibrate to test conditions. The paints are brushed out in test strips perpendicular to the length of the board at a spread rate of $110 cm^2/ml$. The test strips are 5cm by 12.7 cm in size. The paints are allowed to dry at test conditions for at least a 24 hour period.. The paints are rated visually for cracking which would indicate inadequate film formation. A pass rating is given if there are less than 0.005 cracks per $mm^2$; whereas, a fail is given to a paint where the density of cracks exceeds 0.005 per $mm^2$.

Gloss Alkyd Adhesion

Adhesion to gloss alkyd substrates is determined by the following method. Aqueous coating compositions are prepared as described in the LTFF test method. The aqueous coating compositions are applied to a coating of Duron Superior House & Trim Exterior Alkyd House Paint - Forest Green Color (Maunfactured by Duron, Inc., Beltsville, MD) which has been painted onto a substrate and allowed to air dry and cure at room temperature for a period of 4 months. Adhesion to the alkyd substrate is measured by the method of ASTM 4541.

Gloss Retention on exterior exposure

Gloss retention is evaluated by preparing an aqueous coating composition that contains 22% by vol TiOz based on the total vol of the nonvolatile components in the coatings, and which contains 36% by vol nonvolatile materials based on the total vol of materials present in the aqueous coating. For determining the % by vol of nonvolatile materials, any material with a boiling point below 280°C is considered volatile. Appropriate adjustments for Texanol level are made if it is found in the LTFF test that less Texanol is required to get adequate film formation. In that event adjustment of water made is made to keep the % by vol of nonvolatile materials at 36%. A pigment grind using the ingredients in Table C is made using a Cowles pigment disperser.

Table C

| Ingredient | Grams of material |
|---|---|
| Water | 12.52 |
| Tamol™ 731A (Rohm and Haas Co. Philadelphia PA) | 1.98 |
| Tego Foamex™ 810 (Goldschmidt Chemical Corporation, Hopewell VA) | 0.25 |
| Surfynol™ CT-111 (Air Products, Allentown PA) | 0.50 |
| Ti-Pure™ R-706 (E.I. Dupont de Nemours and Co. Wilmington DE) | 66.11 |

The following ingredients (Table D) are then added in the following order

Table D

| Ingredient | Grams of material |
|---|---|
| Water | 10.52 |
| Aqueous dispersion of polymeric particles (@ 50% solids by wt) | 132.68 |
| Texanol™ @ 6% on binder solids (Eastman Chemical Co.) | 3.98 |
| Surfynol™ CT-111 (Air Products, Allentown PA) | 0.25 |
| Acrysol™ RM-2020 NPR (Rohm and Haas Co. Philadelphia PA.) | 3.00 |
| Acrysol™ RM-8W (Rohm and Haas Co. Philadelphia PA) Water | 0.40 33.73 |

The aqueous coating composition is drawn down on separate aluminum panels at a wet thickness of 0.0762 mm (3 mil) using a Bird film applicator 76.2 mm (3 inch) in width. The samples are allowed to dry at 21°C (70°F) and 50% relative humidity for 7 days. The samples are exposed in southern Florida at a commercial exposure station (Q-LAB Weathering Research Service, Homestead, Florida). The exposure direction is south at a 45° angle. The initial 60° gloss is measured and the 60° gloss is measured after 1 year of exposure and referenced back to the initial gloss. A loss of more than 60% of the initial gloss after 1 year is a fail; whereas a pass is a coating which retained at least 40% of the initial gloss.

Dirt Pick up on exterior exposure

Using the same coating test formulation described for evaluating gloss retention above the dirt pick up is evaluated. In this case the L* value is determined. The L* value is determined on the coatings using a colorimeter which conforms to the ASTM E308-01 Standard Practice for Computing the Colors of Objects by Using the CIE System. The CIE $D_{65}$ light source is to be used such as employed in a Minolta CR300 colorimeter.

The aqueous polymer coating composition is drawn down on separate aluminum panels at a wet thickness of 0.0762 mm (3 mil) using a Bird film applicator 76.2 mm (3 inch) in width. The samples are allowed to dry at 21°C (70°F) and 50% relative humidity for 7 days. The samples are exposed in southern Florida at a commercial exposure station (Q-LAB Weathering Research Service, Homestead, Florida). The exposure direction is south at a 45° angle. The colors of the dry coating samples are characterized by measuring initial values of L*, a*, and b* prior to exposure using a

standard lab colorimeter which conforms to the ASTM E308-01 Standard Practice for Computing the Colors of Objects by Using the CIE System. The CIE $D_{65}$ light source is to be used such as employed in a Minolta CR300 colorimeter. After 90 days of exposure, the L*, a*, and b* values are remeasured to determine the changes in color of the dry coating samples. The change in the values of L*, referred to as "ΔL*", are determined for the dry coating samples. A negative value for ΔL* indicates a darkening of the dry coating as a result of the pickup of dirt and other material on the dry coating surface. A relative dirt pickup resistance is determined by comparing back to the appropriate comparative case as is shown below: $R_{DPUR}$ = ΔL* of the example/ΔL* of the comparative.

A value of $R_{DPUR}$ greater than 1 indicates that the example coating has a greater propensity to pick up dirt than the comparative whereas a value less than 1 indicates that the example coating has a greater propensity to pick up dirt than the comparative. Values less than one are desired.

COMPARATIVE EXAMPLE A. Preparation of aqueous dispersion of polymeric particles

A first polymer monomer emulsion (ME-A) is prepared by mixing together 415.7g DI water, 8.5g sodium salt of an alkyl sulfonate (Surf-1), 1034.9g BA, 567.9g MMA and 24.4g MAA. A second polymer monomer emulsion (ME-B) is prepared by mixing 67.8g DI water, 1.5g sodium salt of Surf-1, 54.8g BA, 228g MMA, and 4.3g MAA. 1264.2g DI water is charged into a 5 1, four necked, round bottomed flask equipped with a stirrer, thermometer, heater, and reflux condenser. The water in the flask is heated to 52°C in a nitrogen atmosphere and 3.2g of Surf-land 656.4g of ME-A followed by 15.9g DI water are added. 6.2g of a 0.15% aqueous solution of ferrous sulfate heptahydrate, 0.83g APS in 39.4g DI water, and 0.57g sodium hydrosulfite in 73.0g DI water are then added. After 20 minutes 34.1g Surf-1 and 10.9g DI are added. An additional 15.1g Surf-1 is then added to the remaining unused ME-A. At 83°C, the remaining ME-A and a cofeed of 1.95g APS in 109g DI water are fed into the flask over 120 minutes. When the feeds are complete 32.5g DI water is added. The contents are allowed to cool to 75°C and 1.84g 29% aqueous ammonia in 5.4g DI water is added. The following are added in order: 1.6g of 1% ferrous sulfate heptahydrate aqueous solution, 3.17g 70% active t-butyl hydroperoxide in 9.0g DI water, and 1.63g sodium formaldehyde sulfonate in 36.1g DI water. The mixture is held at 70°C for 15 minutes and then an additional 2.8g 70% active t-butyl hydroperoxide in 7.9g DI water and 1.44g sodium formaldehyde sulfoxylate in 31.9g DI are added. After holding the mixture at 70°C for an additional 15 minutes, 0.16g diethylhydroxylamine in 4.8g DI water is added. The completed first stage is then allowed to cool to 60°C and the ME-B monomer emulsion, with 5.5g DI water, is added to the flask. After 5 minutes, the following are added in order: 0.37g 70% active t-butyl hydroperoxide in 1.9g DI water and 0.41g sodium formaldehyde sulfoxylate in 7.5g DI water. Five minutes after the temperature peak from the polymerization exotherm, 0.61g 70% active t-butyl hydroperoxide in 3.1g DI water, followed by 0.41g sodium formaldehyde sulfoxylate in 7.5g DI water are added. The mixture is allowed to cool to 65°C over 15 minutes and then an additional 0.61g 70% active t-butyl hydroperoxide in 3.1g DI water, followed by 0.41g sodium formaldehyde sulfoxylate in 7.5g DI water are added. Thirty minutes later the final neutralizer of 11.0g 29% aqueous ammonia in 22.0g DI water is added. The final composition of Comparative A is 85 wt% 63.6BA/34.9MMA/1.5MAA first polymer and 15wt% 19.1BA/79.4MMA/1.5MAA second polymer. The Tg of the first polymer is -14°C and the calculated Tg of the second polymer is 60°C.

EXAMPLE 1A. Preparation of aqueous dispersion of polymeric particles

The dispersion is prepared by a two stage process. Stage A is made by preparing a monomer emulsion, ME-A by mixing 41.65g DI Water, 0.858g of a fatty alcohol ether sulfate, 6.41g BA, 119.83g MMA, and 1.92g MAA. 30.25g DI water and 1.66g fatty alcohol ether sulfate are added to a 3 L multi-neck flask fitted with mechanical stirring. The flask contents are heated to 85°C under nitrogen. 0.05g of APS dissolved in 0.83g of DI water is added to the flask. 22.08g of ME-A are feed into the flask over 70 minutes while maintaining the contents of the flask at 85°C. 203g DI water and 4.83g fatty alcohol ether sulfate are added to the flask. 0.335g APS dissolved in 5.58g DI water is added to the flask. At this point the remainder of ME-A is added to the flask over 70 minutes at 85°C. The contents of the reactor are cooled to 70°C. Stage B is prepared in the presence of Stage A by making a monomer emulsion, ME-B, by mixing 327g DI Water, 2.7 g sodium carbonate, 29.4 g fatty alcohol ether sulfate, 580g BA, 375g MMA, 15g MAA, 20g VT, 1.75g nDDM, and 20g of a 50% solution of ureido methacrylate (aldehyde-reactive monomer). 4.0 g fatty alcohol ether sulfate and 280 g DI water are charged to the flask. At 70°C under nitrogen 0.02 g ferrous sulfate heptahydrate and 0.02 g tetrasodium salt of ethylenediamine-tetraacetic acid in 15.6 g DI water are added. ME-B is fed into the flask concurrently with 2.1 g APS in 50 g DI water and 0.5 g of D-Isoascorbic acid in 50 g DI water over a period of 120 minutes at 70°C. 20 g DI water is added to the reactor. After completion of the monomer emulsion addition the reactor is cooled to 60°C. 10ppm ferrous sulfate, 0.9 g t-butyl hydroperoxide and 1.0g D-Isoascorbic acid in aqueous solutions are added. The polymer emulsion is neutralized to pH 9-10 with ammonium hydroxide. The theoretical solids content of the two stage emulsion polymer is 50%, with a projected particle size of 130nm to 150nm. Aqueous dispersion of polymer particles contains 11.4 wt% first polymer having Tg=93°C and 88.6 wt% second polymer having Tg=-6.5°C.

EXAMPLE 1B: Preparation of aqueous dispersion of polymeric particles of Example 1A by an alternative method

The dispersion is prepared by a two stage process. Stage A is made by preparing a monomer emulsion, ME-A, by mixing 41.65g DI Water, 0.858g of a fatty alcohol ether sulfate, 6.41g BA, 119.83g MMA, and 1.92g MAA. 223.3g DI water and 6.49g fatty alcohol ether sulfate are added to a 3 L multi-neck flask fitted with mechanical stirring. The flask contents are adjusted to 18-22°C under nitrogen. A charge of 0.02 g ferrous sulfate heptahydrate and 0.02 g tetrasodium salt of ethylenediamine-tetraacetic acid in 15.6 g DI water are added. Then, 0.7g APS and 0.49g 70% tBHP dissolved in 15g DI water is added to the flask followed by the addition of 0.78g NaBS dissolved in 15g DI water. The batch will begin to exotherm within 5 minutes of the addition of the initiator series. A total exotherm of about 50°C is expected. When the exotherm is complete, the batch temperature is adjusted to 65- 70°C. Stage B is prepared in the presence of Stage A by making a monomer emulsion, ME-B, by mixing 327g DI Water, 2.7 g sodium carbonate, 29.4 g fatty alcohol ether sulfate, 580g BA, 375g MMA, 15g MAA, 20g VT, 1.75g nDDM, and 20g of a 50% solution of ureido methacrylate (aldehyde-reactive monomer). 4.0 g fatty alcohol ether sulfate and 280 g DI water are charged to the flask. At 70°C under nitrogen, ME-B is fed into the flask concurrently with 2.1 g APS in 50 g DI water and 0.5 g of D-Isoascorbic acid in 50 g DI water over a period of 120 minutes at 70°C. 20 g DI water is added to the reactor. After completion of the monomer emulsion addition the reactor is cooled to 60°C. 10ppm ferrous sulfate, 0.9 g t-butyl hydroperoxide and 1.0g D-Isoascorbic acid in aqueous solutions are added. The polymer emulsion is neutralized to pH 9.5 with ammonium hydroxide. The theoretical solids content of the two stage emulsion polymer is 50%, with a projected particle size of 140nm. Aqueous dispersion of polymer particles contains 11.4 wt% first polymer having Tg=93°C and 88.6 wt% second polymer having Tg=-6.5°C.

EXAMPLE 1C: Preparation of aqueous dispersion of polymeric particles of Example 1A by an alternative method

The dispersion is prepared by a two stage process. Stage A is made by preparing a monomer emulsion, ME-A by mixing 41.65g DI Water, 0.858g of a fatty alcohol ether sulfate, 6.41g BA, 119.83g MMA, and 1.92g MAA. 30.25g DI water and 1.66g fatty alcohol ether sulfate are added to a 3 L multi-neck flask fitted with mechanical stirring. The flask contents are heated to 85°C under nitrogen. 0.05g of APS dissolved in 0.83g of DI water is added to the flask. 22.08g of ME-A are feed into the flask over 70 minutes while maintaining the contents of the flask at 85°C. 203g DI water and 4.83g fatty alcohol ether sulfate are added to the flask. 0.335g APS dissolved in 5.58g DI water is added to the flask. At this point the remainder of ME-A is added to the flask over 70 minutes at 85°C. The contents of the reactor are cooled to 70°C. Stage B is prepared in the presence of Stage A by making a monomer emulsion, ME-B, by mixing 327g DI Water, 2.7 g sodium carbonate, 29.4 g fatty alcohol ether sulfate, 580g BA, 375g MMA, 15g MAA, 20g VT, 1.75g nDDM, and 20g of a 50% solution of ureido methacrylate (aldehyde-reactive monomer). 4.0 g fatty alcohol ether sulfate and 280 g DI water are charged to the flask. At 70°C under nitrogen 0.02 g ferrous sulfate heptahydrate and 0.02 g tetrasodium salt of ethylenediamine-tetraacetic acid in 15.6 g DI water are added. ME-B is fed into the flask concurrently with 1.12g t-amyl hydroperoxide in 50 g DI water and 0.5 g of D-Isoascorbic acid in 50 g DI water over a period of 120 minutes at 70°C. 20 g DI water is added to the reactor. After completion of the monomer emulsion addition the reactor is cooled to 60°C. 10ppm ferrous sulfate, 0.86 g t-amyl hydroperoxide and 1.0g D-Isoascorbic acid in aqueous solutions are added. The polymer emulsion is neutralized to pH 9.5 with ammonium hydroxide. The theoretical solids content of the two stage emulsion polymer is 50%, with a projected particle size of 140nm. Aqueous dispersion of polymer particles contains 11.4 wt% first polymer having Tg=93°C and 88.6 wt% second polymer having Tg=-6.5°C.

EXAMPLE 1D. Preparation of aqueous dispersion of polymeric particles

Example 1D is made according to the process used in Comparative Exampe A but with the following first stage composition: 63.6 BA/33.9 MMA/1.5 MAA/1.0 UM.

COMPARATIVE EXAMPLE B. Preparation of aqueous dispersion of polymeric particles

Comparative Example B is made following the method of Example 1A; however the compositions of ME-A and ME-B are adjusted to give a multistage latex with the following compositions: 5 wt% of stage A with a composition of 29 BA/69.5 MMA/1.5 MAA; and 95 wt% of stage B with a composition of 75 BA/23.5 MMA/1.5 MAA. The Tg of Stage A polymer is 40°C and the Tg of stage B polymer is -28°C.

COMPARATIVE EXAMPLE C. Preparation of aqueous dispersion of polymeric particles

Comparative Example C is made following the method of Example 1A; however the compositions of ME-A and ME-B are adjusted to give a multistage latex with the following compositions: 20 wt% of stage A with a composition of

5 BA/ 93.5 MMA/1.5 MAA; and 80 wt% of stage B with a composition of 50 BA/48.5 MMA/1.5 MAA. The Tg of Stage A polymer is 93°C and the Tg of stage B polymer is 5°C.

COMPARATIVE EXAMPLE D. Preparation of aqueous dispersion of polymeric particles

Comparative Example D is made following the method of Example 1A; however the compositions of ME-A and ME-B are adjusted to give a multi stage latex with the following compositions: 25 wt% of stage A with a composition of 5 BA/93.5 MMA/1.5 MAA; and 75 wt% of stage B with a composition of 53.5 BA/45 MMA/1.5 MAA. The Tg of Stage A polymer is 93°C and the Tg of stage B polymer is 0°C.

COMPARATIVE EXAMPLE E. Preparation of aqueous dispersion of polymeric particles

Comparative Example E is made following the method of Example 1A; however the compositions of ME-A and ME-B are adjusted to give a multistage latex with the following compositions: 3 wt% of stage A with a composition of 29 BA/69.5 MMA/1.5 MAA; and 97 wt% of stage B with a composition of 68.5 BA/30 MMA/1.5 MAA. The Tg of Stage A polymer is 40°C and the Tg of stage B polymer is -20°C.

EXAMPLES 2-5. Preparation of aqueous dispersion of polymeric particles

Examples 2-5 are made following the method of Example 1A; however appropriate adjustments are made to vary the amount of first polymer (stage A) present in the polymeric particles. The monomer compositions of Examples 2-5 are the same as those of Example 1A. The stage ratios for Examples 1A-5 are given in Table 2.1 below

Table 2.1

| Ex | Composition | % of Stage A | % of Stage B |
|---|---|---|---|
| 1A | Stage A (5%BA/93.5%MMA/1.5%MAA) Stage B (58%BA/37.5%MMA/1.5% MAA/2%VT/1%UM/0.175%n-DDM) | 11.4 ($T_g$ = 93°C) | 88.6 ($T_g$ = 6°C) |
| 2 | Stage A (5%BA/93.5%MMA/1.5%MAA) Stage B (58%BA/37.5%MMA/1.5% MAA/2%VT/1%UM/0.175%n-DDM) | 20 ($T_g$ = 93°C) | 80 ($T_g$ = -6°C) |
| 3 | Stage A (5%BA/93.5%MMA/1.5%MAA) Stage B (58%BA/37.5%MMA/1.5% MAA/2%VT/1%UM/0.175%n-DDM) | 15 ($T_g$ = 93°C) | 85 ($T_g$ = -6°C) |
| 4 | Stage A (5%BA/93.5%MMA/1.5%MAA) Stage B (58%BA/37.5%MMA/1.5% MAA/2%VT/1%UM/0.175%n-DDM) | 10 ($T_g$ = 93°C) | 90 ($T_g$ = 6°C) |
| 5 | Stage A (5%BA/93.5%MMA/1.5%MAA) Stage B (58%BA/37.5%MMA/1.5% MAA/2%VT/1%UM/0.175%n-DDM) | 5 ($T_g$ = 93°C) | 95 ($T_g$ = -6°C) |

EXAMPLES 6-17. Preparation of aqueous dispersion of polymeric particles

Examples 6-17 are made following the method of Example 1A; however the composition of stage A is varied by substituting either BA, ALMA, VT, or UM for the MMA in Stage A. This is simply accomplished by replacing a portion of the
MMA in ME-A with the desired monomer. The compositions of Examples 6-17 are given below in Table 6.1. Styrene can also be substituted for all or a portion of the MMA in Stage A.

Table 6.1

| Ex | Composition | Wt% of Stage A | Wt% of Stage B |
|---|---|---|---|
| 1A | Stage A (5%BA/93.5%MMA/1.5%MAA) Stage B (58%BA/37.5%MMA/1.5% MAA/2%VT/1%UM/0.175%nDDM) | 11.4 ($T_g$ = 93°C) | 88.6 ($T_g$ = -6°C) |
| 6 | Stage A (10%BA/88.5%MMA/1.5%MAA) Stage B (58%BA/37.5%MMA/1.5% MAA/2%VT/1%UM/0.175%nDDM) | 11.4 ($T_g$ = 80°C) | 88.6 ($T_g$ = -6°C) |
| 7 | Stage A (15%BA/83.5%MMA/1.5%MAA) Stage B (58%BA/37.5%MMA/1.5% MAA/2%VT/1%UM/0.175%n-DDM) | 11.4 ($T_g$ = 69°C) | 88.6 ($T_g$ = 6°C) |
| 8 | Stage A (20%BA/78.5%MMA/1.5%MAA) Stage B (58%BA/37.5%MMA/1.5% MAA/2%VT/1%UM/0.175%nDDM) | 11.4 ($T_g$ = 58°C) | 88.6 ($T_g$ = -6°C) |
| 9 | Stage A (25%BA/73.5%MMA/1.5%MAA) Stage B (58%BA/37.5%MMA/1.5% MAA/2%VT/1%UM/0.175%nDDM) | 11.4 ($T_g$ = 47°C) | 88.6 ($T_g$ = -6°C) |
| 10 | Stage A (29%BA/69.5%MMA/1.5%MAA) Stage B (58%BA/37.5%MMA/1.5% MAA/2%VT/1%UM/0.175%n-DDM) | 11.4 ($T_g$ = 40°C) | 88.6 ($T_g$ = -40°C) |
| 11 | Stage A (10%BA/88%MMA/0.5%ALMA/1.5%MAA) Stage B (58%BA/37.5%MMA/1.5% MAA/2%VT/1%UM/0.175%nDDM) | 11.4 ($T_g$ = 80°C) | 88.6 ($T_g$ = 6°C) |
| 12 | Stage A (10%BA/87.5%MMA/1%ALMA/1.5%MAA) Stage B (58%BA/37.5%MMA/1.5% MAA/2%VT/1%UM/0.175%n-DDM) | 11.4 ($T_g$ = 80°C) | 88.6 ($T_g$ = 6°C) |
| 13 | Stage A (10%BA/86%MMA/2.5%ALMA/1.5%MAA) Stage B (58%BA/37.5%MMA/1.5% MAA/2%VT/1%UM/0.175%n-DDM) | 11.4 ($T_g$ = 80°C) | 88.6 ($T_g$ = 6°C) |
| 14 | Stage A (10%BA/87.5%MMA/1%VT /1.5%MAA) Stage B (58%BA/37.5%MMA/1.5% MAA/2%VT/1%UM/0.175%n-DDM) | 11.4 ($T_g$ = 80°C) | 88.6 ($T_g$ = 6°C) |
| 15 | Stage A (10%BA/86.5%MMA/2%VT/1.5%MAA) Stage B (58%BA/37.5%MMA/1.5% MAA/2%VT/1%UM/0.175%n-DDM) | 11.4 ($T_g$ = 80°C) | 88.6 ($T_g$ = 6°C) |
| 16 | Stage A (10%BA/83.5%MMA/5%VT /1.5%MAA) Stage B (58%BA/37.5%MMA/1.5% MAA/2%VT/1%UM/0.175%n-DDM) | 11.4 ($T_g$ = 80°C) | 88.6 ($T_g$ = 6°C) |
| 17 | Stage A (10%BA/87.5%MMA/1%UM /1.5%MAA) Stage B (58%BA/37.5%MMA/1.5% MAA/2%VT/1%UM/0.175%n-DDM) | 11.4 ($T_g$ = 80°C) | 88.6 ($T_g$ = -6°C) |

EXAMPLES 18-29. Preparation of aqueous dispersion of polymeric particles

Examples 18-29 are made following the method of Example 1A; however the composition of stage B is varied by substituting BA for the MMA in Stage B. In addition the amount of n-DDM or UM is also varied. This is simply accomplished by replacing a portion of the MMA in ME-B with BA. The compositions of Examples 18-29 are given below

in Table 18.1. Styrene can also be substituted for all or for a portion of the MMA in Stage B.

Table 18.1

| Ex | Composition | Wt.% of Stage A | Wt.% of Stage B |
|---|---|---|---|
| 1C.1 | Stage A (10%BA/88.5%MMA/1.5%MAA) Stage B (58%BA/37.5%MMA/1.5%MAA/2%VT/1%UM/0.175%n-DDM) | 11.4 ($T_g$ = 80°C) | 88.6 ($T_g$ = -6°C) |
| 18 | Stage A (10%BA188.5%MMA/1.5%MAA) Stage B (53.5%BA/42%MMA/1.5%MAA/2%VT/1%UM/0.175%n-DDM) | 11.4 ($T_g$ = 80°C) | 88.6 ($T_g$ = 0°C) |
| 19 | Stage A (10%BA/88.5%MMA/1.5%MAA) Stage B (60%BA/35.5%MMA/1.5%MAA/2%VT/1%UM/0.175%n-DDM) | 11.4 ($T_g$ = 80°C) | 88.6 ($T_g$ = -9°C) |
| 20 | Stage A (10%BA/88.5%MMA/1.5%MAA) Stage B (62.5%BA/33%MMA/1.5%MAA/2%VT/1%UM/ 0.175%n-DDM) | 11.4 ($T_g$ = 80°C) | 88.6 ($T_g$ = 13°C) |
| 21 | Stage A (10%BA/88.5%MMA/1.5%MAA) Stage B (65%BA/30.5%MMA/1.5%MAA/2%VT/1%UM10.175%n-DDM) | 11.4 ($T_g$ = 80°C) | 88.6 ($T_g$ = 16°C) |
| 22 | Stage A (10%BA/88.5%MMA/1.5%MAA) Stage B (68.5%BA/27%MMA/1.5%MAA/2%VT/1%UM/0.175%n-DDM) | 11.4 ($T_g$ = 80°C) | 88.6 ($T_g$ = -20°C) |
| 23 | Stage A (10%BA/88.5%MMA/1.5%MAA) Stage B (58%BA/37.5%MMA/1.5%MAA/2%VT/1%UM) | 11.4 ($T_g$ = 80°C) | 88.6 ($T_g$ = 6°C) |
| 24 | Stage A (10%BA/88.5%MMA/1.5%MAA) Stage B (58%BA/37.5%MMA/1.5%MAA/2%VT/1%UM/0.05%n-DDM) | 11.4 ($T_g$ = 80°C) | 88.6 ($T_g$ = 6°C) |
| 25 | Stage A (10%BA/88.5%MMA/1.5%MAA) Stage B (58%BA/37.5%MMA/1.5%MAA/2%VT/1%UM/0.1%n-DDM) | 11.4 ($T_g$ = 80°C) | 88.6 ($T_g$ = -6°C) |
| 26 | Stage A (10%BA/88.5%MMA/1.5%MAA) Stage B 0(58%BA/37.5%MMA/1.5%MAA/2%VT/1%UM/0.125%n-DDM) | 11.4 ($T_g$ = 80°C) | 88.6 ($T_g$ = 6°C) |
| 27 | Stage A (10%BA/88.5%MMA/1.5%MAA) Stage B (58%BA/37.5%MMA/1.5%MAA/2%VT/1%UM/0.25%n-DDM) | 11.4 ($T_g$ = 80°C) | 88.6 ($T_g$ = -6°C) |
| 28 | Stage A (10%BA/88.5%MMA/1.5%MAA) Stage B (58%BA/36.5%MMA/1.5%MAA/2%VT/2%I1M/0.175%n-DDM) | 11.4 ($T_g$ = 80°C) | 88.6 ($T_g$ = 6°C) |
| 29 | Stage A (10%BA/88.5%MMA/1.5%MAA) Stage B (58%BA/35.5%MMA/1.5%MAA/2%VT/3%UM/0.175%n-DDM) | 11.4 ($T_g$ = 80°C) | 88.6 ($T_g$ = -6°C) |

EXAMPLE 30. Alkyd Adhesion Results

Using the alkyd adhesion test method above an aqueous coating composition is made using Comparative Example A, and Examples 1A and 1D. The coating including Examples 1A and 1D of the present invention is superior

in alkyd adhesion to that of Comparative Example A. Comparative Example A does not contain an aldehyde-reactive group whereas Example 1 does.

EXAMPLE 31. Low Temperature Film Formation (LTFF):

Using the procedure above for assessing LTFF an aqueous coating composition is made using Examples 1A-29 and Comparative Examples C-D. Coatings including Examples 1A-29 of the present invention each pass the LTFF test, whereas Comparative Examples C-D fail the LTFF test. Examples 1A-29 have second polymer $T_g$'s between 0°C and -20°C and have first polymer levels of 5 wt% to 20 wt%; whereas Comparative Example C has a second polymer $T_g$ >0°C, and Comparative Example D has a first polymer level above 20 wt%.

EXAMPLE 32. Gloss Retention on exterior exposure

Using the procedure above for assessing gloss retention an aqueous coating composition is made using Examples 1A-29 and Comparative Example B. Coatings including Examples 1A-29 of the present invention all pass the gloss retention test, whereas Comparative B fails the gloss retention test. Examples 1A-29 have second polymer $T_g$'s between 0°C and -20°C, whereas Comparative Example B has a second polymer Tg <-20°C.

EXAMPLE 33. Dirt Pick up on exterior exposure

Using the procedure above for assessing dirt pick up an aqueous coating composition coating is made using Example 1A and Comparative Example E. Example 1A has a value of $R_{DPUR}$ which is less than one when Comparative E is used as the reference comparative case. Example 1A has a first polymer level of 11.4 wt%, whereas Comparative Example E has a first polymer level of 3 wt%.

Using the procedure above for assessing dirt pick up an aqueous coating composition coating is made using Example 1A; however, 0.19 grams of benzophenone is added to 132.68 grams of example 1A prior to preparing the coating. Example 1A modified with benzophenone has a value of $R_{DPUR}$ which is less than one when Comparative E is used as the reference comparative case. In addition Example 1A modified with benzophenone displays improved dirt pick up resistance relative to Example 1A.

## Claims

1. An aqueous dispersion of polymeric particles, said particles comprising:

   from 5% to 20 % by weight, based on the weight of said polymeric particles, of a first polymer comprising at least one copolymerized ethylenically unsaturated nonionic monomer, said first polymer having a glass transition temperature (Tg) of from 40 °C to 95 °C; and
   from 80% to 95 % by weight, based on the weight of said polymeric particles, of a second polymer comprising at least one copolymerized ethylenically unsaturated nonionic monomer and from 0.25% to 5% by weight, based on the weight of said second polymer, of a copolymerized aldehyde reactive group-containing monomer, said second polymer having a Tg of from -20 °C to 0 °C and an acid number of from 2 to 160, wherein said copolymerized aldehyde reactive group-containing monomer is a monomer which, in a homogenous solution containing 20% by weight of the monomer and an equimolar amount of formaldehyde at any pH from 1 to 14, will exhibit greater than 10% extent of reaction between the monomer and formaldehyde on a molar basis in one day at 25 °C.

2. The aqueous dispersion of claim 1 wherein at least one of said first polymer and said second polymer comprises from 0.25% to 20%, by weight, based on the weight of said polymer, of a copolymerized alkyl-substituted vinyl aromatic monomer.

3. The aqueous dispersion of claim 1 formed by an emulsion polymerization process wherein said second polymer is formed in the presence of said first polymer.

4. The aqueous dispersion of claim 3 wherein said first polymer further comprises from 0.1% to 5% by weight, based on the weight of said first polymer, of a copolymerized multiethylenically unsaturated monomer.

5. The aqueous dispersion of claim 3 wherein said particles comprise from 5% to 15 % by weight, based on the weight of said polymeric particles, of said first polymer further comprising from 0.25% to 3% by weight, based on the weight

of said first polymer, of a copolymerized multiethylenically unsaturated monomer, said first polymer having an acid number of from 0.1 to 13; and
from 85% to 95% by weight, based on the weight of said polymeric particles, of said second polymer having a Tg of from -13 °C to -6°C and an acid number of from 2 to 30.

**6.** An aqueous coating composition comprising the aqueous dispersion of claim 1 and at least one pigment, said coating composition having a pigment volume concentration (PVC) of from 5 to 60 and having a volatile organic content (VOC) of less than 5%.

**7.** The aqueous coating composition of claim 6 further comprising from 0.1 to 1 weight % benzophenone, based on dry polymer weight.

**8.** A method for providing a coated substrate comprising: forming the aqueous coating composition of claim 6;
applying said aqueous coating composition to said substrate; and
drying, or allowing to dry, said aqueous composition.

**9.** A coated substrate formed by the method of claim 7.

## Patentansprüche

**1.** Wässrige Dispersion aus Polymerteilchen, wobei die Teilchen umfassen:

von 5 Gew.-% bis 20 Gew.-%, bezogen auf das Gewicht der Polymerteilchen, eines ersten Polymers, umfassend mindestens ein copolymerisiertes ethylenisch ungesättigtes nichtionisches Monomer, wobei das erste Polymer eine Glasübergangstemperatur (Tg) von 40°C bis 95°C aufweist, und
von 80 Gew.-% bis 95 Gew.-%, bezogen auf das Gewicht der Polymerteilchen, eines zweiten Polymers, umfassend mindestens ein copolymerisiertes ethylenisch ungesättigtes nichtionisches Monomer und von 0,25 Gew.-% bis 5 Gew.-%, bezogen auf das Gewicht des zweiten Polymers, eines copolymerisierten Monomers, welches Aldehyd-reaktive Gruppe(n) enthält, wobei das zweite Polymer eine Tg von -20°C bis 0°C und eine Säurezahl von 2 bis 160 aufweist, wobei das copolymerisierte Monomer, welches Aldehyd-reaktive Gruppe(n) enthält, ein Monomer ist, welches in einer homogenen Lösung, enthaltend 20 Gew.-% des Monomers und eine äquimolare Menge an Formaldehyd, bei einem pH von 1 bis 14 mehr als 10% Ausmaß an Reaktion zwischen dem Monomer und Formaldehyd auf einer molaren Basis in einem Tag bei 25°C zeigen wird.

**2.** Wässrige Dispersion nach Anspruch 1, wobei mindestens eines von dem ersten Polymer und dem zweiten Polymer von 0,25 Gew.-% bis 20 Gew.-%, bezogen auf das Gewicht des Polymers, eines copolymerisierten Alkylsubstituierten vinylaromatischen Monomers umfaßt.

**3.** Wässrige Dispersion nach Anspruch 1, gebildet durch ein Emulsionspolymerisationsverfahren, wobei das zweite Polymer in Anwesenheit des ersten Polymers gebildet ist.

**4.** Wässrige Dispersion nach Anspruch 3, wobei das erste Polymer ferner von 0,1 Gew.-% bis 5 Gew.-%, bezogen auf das Gewicht des ersten Polymers, eines copolymerisierten mehrfach ethylenisch ungesättigten Monomers umfaßt.

**5.** Wässrige Dispersion nach Anspruch 3, wobei die Teilchen von 5 Gew.-% bis 15 Gew.-%, bezogen auf das Gewicht der Polymerteilchen, des ersten Polymers umfassen, ferner umfassend von 0,25 Gew.-% bis 3 Gew.-%, bezogen auf das Gewicht des ersten Polymers, eines copolymerisiertes mehrfach ethylenisch ungesättigten Monomers, wobei das erste Polymer eine Säurezahl von 0,1 bis 13 aufweist, und von 85 Gew.-% bis 95 Gew.-%, bezogen auf das Gewicht der Polymerteilchen, des zweiten Polymers mit einer Tg von -13°C bis -6°C und einer Säurezahl von 2 bis 30.

**6.** Wässrige Beschichtungszusammensetzung, umfassend die wässrige Dispersion nach Anspruch 1 und mindestens ein Pigment, wobei die Beschichtungszusammensetzung eine Pigmentvolumenkonzentration (PVC) von 5 bis 60 aufweist und einen Gehalt an flüchtigen organischen Stoffen (VOC) von weniger als 5% aufweist.

**7.** Wässrige Beschichtungszusammensetzung nach Anspruch 6, ferner umfassend von 0,1 bis 1 Gew.-% Benzophenon, bezogen auf das Trockenpolymergewicht.

**8.** Verfahren zum Bereitstellen eines beschichteten Substrats, umfassend Bilden der wässrigen Beschichtungszusammensetzung nach Anspruch 6, Auftragen der wässrigen Beschichtungszusammensetzung auf das Substrat und Trocknen oder Gestatten zu Trocknen der wässrigen Zusammensetzung.

**9.** Beschichtetes Substrat, gebildet durch das Verfahren nach Anspruch 7.

## Revendications

**1.** Dispersion aqueuse de particules de polymère, lesdites particules comprenant :

de 5 % à 20 % en poids, par rapport au poids desdites particules de polymère, d'un premier polymère comprenant au moins un monomère copolymérisé, non ionique à insaturation éthylénique, ledit premier polymère ayant une température de transition vitreuse (Tg) de 40°C à 95°C ; et
de 80 % à 95 % en poids, par rapport au poids desdites particules de polymère, d'un second polymère comprenant au moins un monomère copolymérisé, non ionique à insaturation éthylénique et de 0,25 % à 5 % en poids, par rapport au poids dudit second monomère, d'un monomère copolymérisé contenant un groupe réactif avec un aldéhyde, ledit second polymère ayant une Tg de -20°C à 0°C et un indice d'acide de 2 à 160, **caractérisé en ce que** le monomère copolymérisé contenant un groupe réactif avec un aldéhyde est un monomère qui, dans une solution homogène contenant 20 % en poids du monomère et une quantité équimoléculaire de formaldéhyde à n'importe quel pH entre 1 et 14, doit présenter plus de 10 % d'avancement de la réaction entre le monomère et le formaldéhyde sur une base molaire en un jour à 25°C.

**2.** Dispersion aqueuse selon la revendication 1, **caractérisée en ce qu'**au moins un dudit premier polymère et dudit second polymère contient de 0,25 % à 20 %, en poids, par rapport au poids dudit polymère, d'un monomère copolymérisé vinyl aromatique substitué par un alkyle.

**3.** Dispersion aqueuse selon la revendication 1 formée par un procédé de polymérisation en émulsion, **caractérisée en ce que** le second polymère est formé en présence dudit premier polymère.

**4.** Dispersion aqueuse selon la revendication 3, **caractérisée en ce que** ledit premier polymère comprend en outre de 0,1 % à 5 % en poids, par rapport au poids dudit premier polymère, d'un monomère copolymérisé à insaturation multiéthylénique.

**5.** Dispersion aqueuse selon la revendication 3, **caractérisée en ce que** lesdites particules comprennent de 5 % à 15 % en poids, par rapport au poids desdites particules de polymère, dudit premier polymère comprenant en outre de 0,25 % à 3 % en poids, par rapport au poids dudit premier polymère, d'un monomère copolymérisé à insaturation multiéthylénique, ledit premier polymère ayant un indice d'acide de 0,1 à 13 ; et
de 85 % à 95 % en poids, par rapport au poids desdites particules de polymère, dudit second polymère ayant une Tg de -13°C à -6°C et un indice d'acide de 2 à 30.

**6.** Composition de revêtement aqueuse comprenant la dispersion aqueuse selon la revendication 1 et au moins un pigment, ladite composition de revêtement ayant une concentration pigmentaire volumique (PVC) de 5 à 60 et ayant un contenu en produits organiques volatils (VOC) inférieur à 5 %..

**7.** Composition de revêtement aqueuse selon la revendication 6, comprenant en outre de 0,1 à 1 % en poids de benzophénone, par rapport au poids de polymère sec.

**8.** Procédé pour obtenir un substrat revêtu, comprenant:

la formation d'une composition de revêtement aqueuse selon la revendication 6 ;
l'application de ladite composition de revêtement aqueuse sur ledit substrat ; et
le séchage, ou laisser sécher, ladite composition aqueuse.

**9.** Substrat revêtu formé selon le procédé de la revendication 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1304343 A
- US 6476097 B
- EP 1352924 A
- US 5340858 A
- US 5350787 A
- US 5352720 A
- US 4539361 A
- US 4456726 A
- US 4977219 A
- US 5574083 A


### Non-patent literature cited in the description


- **T.G. FOX.** *Bull. Am. Physics Soc.,* 1956, vol. 1 (3), 123